# EUROPÄISCHE PATENTSCHRIFT

(11) **EP 1 412 159 B1**
(45) Veröffentlichungstag und Bekanntmachung des Hinweises auf die Patenterteilung: **20.07.2005**
(21) Anmeldenummer: 02747130.9
(22) Anmeldetag: 26.07.2002
(51) Int. Cl.: B29C 45/72

(54) **VORRICHTUNG FÜR DAS CHARGENWEISE HERSTELLEN VON VORFORMLINGEN**
DEVICE FOR PRODUCING PREFORMS IN BATCH QUANTITIES
DISPOSITIF DESTINE A LA REALISATION DISCONTINUE DE PREFORMES

(30) Priorität: 27.07.2001 CH 139901
(43) Veröffentlichungstag der Anmeldung: 28.04.2004
(73) Patentinhaber: Netstal-Maschinen AG, 8752 Näfels (CH)
(72) Erfinder: WEINMANN, Robert, CH-8872 Weesen (CH)
(74) Vertreter: Ackermann, Ernst, Dipl.-Ing. HTL
(86) Internationale Anmeldenummer: PCT/CH2002/000422
(87) Internationale Veröffentlichungsnummer: WO 2003/011563

(56) Entgegenhaltungen:
- EP-A- 0 937 566
- WO-A-00/24562
- DE-A- 19 848 837
- US-A- 5 114 327
- US-A- 5 855 932
- "WASSERKUEHLUNG IM ROBOT-ARM STEIGERT SPRITZGIESSKAPAZITAET" KUNSTSTOFFBERATER, KUNSTSTOFF VERLAG. ISERNHAGEN, DE, Bd. 34, Nr. 10, 1. Oktober 1989 (1989-10-01), Seite 24 XP000165325 ISSN: 0172-6374

## Beschreibung

### Technisches Gebiet

Die Erfindung betrifft eine Vorrichtung für das chargenweise Herstellen von hülsenförmigen Teilen insbesondere Vorformlingen, für PET-Flaschen, welche nach dem Spritzvorgang den Formen entnommen und in einem Nachkühler in einen formstabilen Lagerzustand gebracht werden, wobei alle in einer Form pro Zyklus gespritzten Teile entnommen und dem Nachkühler übergebbar sind.

Bei der Herstellung der relativ dickwandigen Vorformlinge sind für die zu erreichende Zykluszeit die Kühlung bzw, die Kühlzeit ein wichtiger und bestimmender Faktor. Die Hauptkühlleistung findet noch in den Giessformhälften statt. Beide Giessformhälften werden während dem Giessprozess intensiv wassergekühlt, so dass die Temperatur noch in der Form von etwa 280°, wenigstens in den Randschichten, bis auf etwa 70° bis 80° C gesenkt werden kann. 2/3 der Kühlleistung erfolgt dabei über den Kern, 1/3 über die Aussenkühlung der entsprechenden Spritzgiessformen. Es wird in den äusseren Schichten der Spritzgiessteile sehr rasch die sogenannte Glastemperatur von etwa 140° C durchfahren. Der eigentliche Giessvorgang bis zur Entnahme der heissen Spritzgiessteile konnte auf etwa 13 bis 15 Sekunden gesenkt werden ohne Qualitätseinbusse in Bezug auf die noch halbstarren Spritzgiessteile. Die Spritzgiessteile müssen zumindest aussen genügend stark verfestigt werden, so dass sie mit relativ grossen Kräften der Auswurfhilfen angefasst und ohne Deformation bzw. Schäden den Formen entnommen werden können. Die intensive Wasserkühlung in den Giessformhälften erfolgt physikalisch bedingt und in Bezug auf die enorme Wandstärke stark zeitverzögert, von aussen nach innen. Dies bedeutet, dass die 70° bis 80° C nicht einheitlich im ganzen Querschnitt erreicht werden. Die Folge ist eine rasche Rückerwärmung, im Materialquerschnitt gesehen, von innen nach aussen, sobald die intensive Kühlwirkung unterbrochen wird. Der sogenannten Nachkühlung kommt aus zwei Gründen grösste Bedeutung zu: Erstens sollen bis zum formstabilen Lagerzustand jegliche Formänderungen aber auch Oberflächenschäden, etwa Druckstellen, usw., vermieden werden. Es muss zweitens verhindert werden, dass die Abkühlung im höheren Temperaturbereich zu langsam erfolgt und sich z.B. durch Rückerwärmungen örtlich schädliche Kristallbildungen einstellen. Ziel ist ein gleichmässig amorpher Zustand im Material der vergossenen Form. Die Oberfläche der Spritzgiessteile darf nicht mehr klebrig sein, weil sonst in den relativ grossen Kisten bzw. Abpackgebinden mit Tausenden von lose eingeschütteten Teilen an den Berührungspunkten Haftschäden entstehen können. Die fertigen Spritzgiessteile dürfen auch bei leichter Rückerwärmung eine Oberflächentemperatur von 40°C nicht überschreiten. Die Nachkühlung benötigt viel mehr Zeit als die Hauptkühlung in der Spritzgiessform. Da in der Form z.B. 96 Vorformlinge gleichzeitig gespritzt werden, ergibt sich ein enormes Handlingsproblem. Die innen noch weichen Spritzlinge dürfen nur in passenden Übernahmeformen gehalten und bewegt werden. In der Praxis werden verschiedene Lösungen eingesetzt.

### Stand der Technik

Die DE 38 86 076 hatte sich als hauptsächliches Ziel gesetzt, eine Vorrichtung zur Herstellung hohler Kunststoffartikel durch ein Spritzgiessverfahren zu schaffen, womit ein möglichst kurzer Arbeitszyklus mit verlängerter Nachkühlung der hohlen Artikel erreicht werden kann. Gelöst wird das Problem mit einem vergrösserten Nachkühler, der die Vorformlinge selber aus dem offenen Werkzeug holt und zu diesem Zweck an die entsprechenden Übergabepositionen fährt. Das Fassungsvermögen des Nachkühlers wurde dadurch vergrössert, dass in einer Übernahmeebene ein Mehrfaches an Teilen gegenüber der maximalen Teilzahl in der Form vorgesehen ist. Der Nachkühler weist schachbrettartig eine Vielzahl von Reihen auf, welche je als Gruppen zusammen die Menge eines Spritzzyklusses aufnehmen. Mit zwei oder drei parallelen Gruppen können entsprechend die Menge von zwei oder drei Zyklen übernommen und gleichzeitig gekühlt werden. Die Gruppen sind zueinander regelmässig versetzt, so dass durch Einschieben in einer ersten, zweiten oder dritten Position die jeweils freien Plätze bzw. Kühlpositionen in dem Nachkühler gefüllt werden können. Jede Gruppe bleibt wenigstens während einer zweifachen Zeit in- Bezug auf einen Spritzzyklus in dem Nachkühler und wird danach von dem Nachkühler abgeworfen. In der Praxis hat sich diese Lösung erfolgreich etabliert.

Die US-PS 5 855 932 zeigt eine Weiterentwicklung des Lösungsgedankens der DE 38 86 076. Je nach Position, welche der Nachkühler in Bezug auf die Einteilung der Formnester einerseits und die freien Plätzen in dem Nachkühler andererseits anfährt -muss einer der drei verschieden angeordneten Sensoren aktiviert werden. Für die Sicherstellung fährt der Nachkühler mit einer gabelartigen Führung auf einen Tragbolzen auf.

Die EP 0 686 081 schlägt einen völlig anderen Lösungsweg vor, um die Nachkühlzeit in Bezug auf den Spritzzyklus zu vergrössern. Es werden zwei oder mehrere vollständig unabhängig bewegbare Nachkühler mit je einem Fassungsvermögen der Giessform vorgesehen. Die beiden Nachkühler laufen insofern synchron, als jeder zeitlich nacheinander identisch in die offene Form ein- und ausfährt und je eine Charge von Vorformlingen aus den geöffneten Formhälfen übernimmt. Zweckmässigerweise werden die beiden Nachkühler für die eigentliche Kühlzeit auf je einer der beiden Seiten der Spritzgiessmaschine positioniert. Die Nachkühlung findet alternierend in je zwei getrennten Kühlern statt. Die Lösung der EP 0 686 081 ist insofern nachteilig gegenüber den beiden zuvorgenannten Konzepten, als ein baulicher Mehraufwand notwendig ist, vor allem wenn mehr als zwei Nachkühler, z.B. für eine Verdreifachung der Nachkühlzeit, gefordert sind.

Die US-PS 5 114 327 zeigt eine gattungsgemässe Vorrichtung für das chargenweise Herstellen von Vorformlingen, für PET-Flaschen. Alle in einer Form pro Zyklus gespritzten Teile werden gleichzeitig entnommen und dem Nachkühler übergeben. Der Nachkühler übernimmt somit die ganze Menge der pro Zyklus erzeugten Vorformlinge, wozu der Nachkühler nach Öffnen der Formhälten horizontal in den offenen Formen einfährt und danach sofort wieder ausfährt. Die noch heissen Vorformlinge aus den offenen Formhälften werden in dem Nachkühler auf eine transportfähige Temperatur gebracht und verfestigt. Nachteilig bei der dargestellten Lösung ist die feste Zuordnung der Nachkühlzeit an die Zykluszeit für das Spritzgiessen der Teile. Eine Erhöhung der Kühlposition in dem Nachkühler würde zu einer entsprechenden Vergrösserung des Nachkühles führen. Die US-PS 5 114 327 gibt keine Anregung auf welche Weise die Anzahl der Kühlpositionen in einer Übernahmeebene des Nachkühlers erhöht bzw. wie die Kühlpositionen verdichtet werden können.

Der neuen Erfindung wurde nun die Aufgabe zugrunde gelegt, eine Lösung zu suchen, welche bei gegebenen Anordnungen der Spritzteile in der Form eine Erhöhung bzw. Verdichtung der Anzahl von Kühlpositionen in einer Übernahmeebene des Nachkühlers erlaubt.

### Darstellung der Erfindung

Die erfindungsgemässe Lösung ist dadurch gekennzeichnet, dass der Nachkühler als Entnahmeroboter ausgebildet ist und in einer Übernahmeebene ein Fassungsvermögen aufweist, das ein Mehrfaches der pro Spritzzyklus hergestellten Teile entspricht, wobei der Entnahmeroboter eine Einteilung der Kühlpositionen mit versetzten Reihen (O, P) und steuer-/regelbare Bewegungsmittel für die zwei Koordinaten (Y, Z) der Übernahmeebene aufweist zur grösseren Verdichtung der zu kühlenden Teile.

Die neue Lösung schlägt gleichsam ein freies gesteuertes Hineinfahren zu einer in den Formen festgelegten Bild der Einteilung vor, was erst durch die freie Bewegbarkeit in zwei Raumachsen bzw. Koordinaten möglich ist. Die DE 38 86 076 sowie die US-PS 5 855 932 gehen aus von einer rein linearen Verschiebung des Nachkühlers sowie dem Zubewegen auf mehrere wählbare Anschläge. Das Fahren auf einen Anschlag bzw. auf eine entsprechende Schaltsstelle ist nachteilig, wenn ein grosser Körper gleichzeitig oder kurz nacheinander in zwei Raumrichtungen bzw. in viele beliebige Positionen verfahren werden muss. Bei der neuen Lösung können die Bewegungsmittel für den grossen Fahrweg des Nachkühlers und das- Anfahren auf eine exakte Position kombiniert werden, so- dass jede Bewegung für sich für beide. Koordinaten optimierbar ist, was ein zentrales Anliegen in der Robotertechnik ist, besonders wenn eine -recht grosse Masse, wie die des Nachkühlers, schnell und präzise bewegt werden muss.

Die neue Erfindung erlaubt eine ganze Anzahl besonders vorteilhafter Ausgestaltungen, wofür auf die Ansprüche 2 bis 12 Bezug-genommen wird.

Das Fassungsvermögen des Nachkühlers entspricht mindestens dem drei-, insbesondere- dem vierfachen der Zahl von in einem Spritzgiesszyklus hergestellten Teilen. Besonders für grössere Formen mit 96, 144 oder mehr Formnestern wird ein vierfaches Fassungsvermögen vorgezogen. Das vierfache Fassungsvermögen ist für dickwandige Teile besonders vorteilhaft, weil beim dreifachen Fassungsvermögen die benötigte Nachkühlungszeit im Verhältnis zu der-Hauptkühlung in der Form oft etwas zu kurz ist. Vorteilhafterweise weisen die steuerbaren Bewegungsmittel Programmspeicher und für jede der beiden Raumachsen entsprechende programmgesteuerte/geregelte Servomotoren auf.

Vom Ergebnis her bieten sich für die Weg-Regelung/Steuerung zwei Lösungswege an: Bei einem ersten werden die Positionssignale für das bewegte Teil über entsprechende Sensoren direkt aus der AC-Servomotorsteuerung gewonnen. Gemäss einem zweiten Lösungsweg wird das Positionssignat über das bewegte Teil gewonnen und die Bewegung entsprechend gesteuert/geregelt.

Gemäss einem ersten Ausgestaltungsweg der neuen Erfindung ist die Übernahmeebene bei einer Maschine mit horizontaler Formöffnungsbewegung senkrecht angeordnet und der Nachkühler selber mit den Bewegungsmitteln als Entnahmeroboter ausgebildet. Dieser Ausgestaltungsweg geht als bekannter Stand der Technik z.B. aus von der DE 38 86 076 oder US 5 855 932. Diese weist bereits eine teilweise Automatisierung auf. Durch das Bewegen des Nachkühlers für den Entnahmevorgang in nur einer Koordinate ist nur ein sehr beschränkter Weiterausbau möglich.

Eine weitere wichtige Ausgestaltung liegt darin, dass der Nachkühler als Austauschmodul ausgebildet wird, mit Passstellen für ein jeweils schnelles und exaktes Wiedermontieren eines anderen Austauschmodules. Auf der Seite des Formenbauers sind vor allem zwei Probleme angesprochen: Erstens, dass entweder noch grössere Vorformlinge mit grösseren Abständen für die Einteilungen oder aber zweitens kleinere Vorformlinge mit entsprechend kleineren Abständen und viel mehr Formnestern wirtschaftlichere Lösungen darstellen. Eine Anpassung des Nachkühlers als Austauschmodul eröffnet ganz neue Möglichkeiten, wobei bereits vorhandene Formen oder Nachkühler weiter verwendet werden können. Währenddem die Formen gewechselt werden, kann auch der Nachkühler ausgetauscht werden, so dass die Produktion -mit den neuen Formen ohne Verzug wieder in der höchst möglichen Automatisierungsstufe aufgenommen werden kann. Besonders. bevorzugt -weist die Vorrichtung Rechner- und Speichermittel auf zur programmatischen Abspeicherung aller Bewegungen, derart, dass bei einem Form- und Nachkühlerwechsel durch Wahl eines passenden Programmes die Produktion wieder startbereit ist.

Für die neue Lösung ist es wichtig, dass gleichsam jede Zwischenposition in beiden Koordinaten anfahrbar ist, wie dies bei beliebiger Anordnung des Bildes der Formnester notwendig ist, wobei die Positionen millimeter- bzw. zehntelmillimetergenau anfahrbar sind.

Gemäss einem zweiten Ausgestaltungsweg wird von der WO00/24562 ausgegangen, welche eine horizontale Übernahmeebene für den Nachkühler aufweist. Bei der WO00/24562 wurde für die Bewegungssteuerung ebenfalls von dem Konzept "Fahren auf verstellbare Anschläge" ausgegangen. Der Nachkühler führt eine grosse Transferbewegung zwischen Vorformlingaufnahme und Vorformlingabwurf aus. Für die Gruppenanwahl kann der Nachkühler quer verschoben werden. In Bezug auf den Automatisierungsgrad geht die WO00/24562 nicht weiter als die DE 38 86 076. Gemäss dem zweiten Ausgestaltungsweg der neuen Erfindung werden für die Übernahme der Teile von den Spritzgiessformen und für die Übernahme an den Nachkühler gesonderte, teils in die Steuerung/Regelung verlagerte Robotikmittel vorgesehen. Die gesonderten Robotikmittel werden -bevorzugt zweiteilig als eine Entnahmevorrichtung sowie als Transfergreifer ausgebildet, wobei die Entnahmevorrichtung eine gesteuerte/geregelte Bewegungsachse, vorzugsweise in senkrechter Richtung, und der Transfergreifer als gesteuerte/geregelte Bewegungsachsen eine horizontale Achse sowie eine Drehachse aufweist.

Gemäss einer besonders vorteilhaften weiteren Ausgestaltung weisen die Entnahmevorrichtung sowie der Transfergreifer je austauschbare Aufnahmemodulplatten auf mit Passstellen für ein jeweils schnelles und exaktes Wiedermontieren eines anderen Austauschmodules. Durch diese Massnahme wird eine unerwartet hohe Flexibilisierung für das Handling, besonders aber auch für den Formenbau, erreicht. Dabei richtet sich- die gewonnene Flexibilisierung nicht nur auf einen vorhandenen Werkzeugbestand sondern auch auf jede zukünftige Entwicklung. Vorteilhafterweise werden die Bewegungsachsen des Nachkühlers und/oder der Entnahmevorrichtung und/oder des Transfergreifers als steuerbare AC-Servoachsen ausgebildet, welche und über zentrale Programme steuer-/regelbar sind. Die steuer-/regelbaren Bewegungsmittel der Entnahmevorrichtung und/oder des Transfergreifers und/oder des Nachkühlers weisen -bevorzugt wenigstens einen Riemenübertrieb -und/oder einen Zahnstangenübertrieb auf.

### Kurze Beschreibung der Erfindung

Die Erfindung wird nun an Hand einiger Ausführungsbeispiele mit weiteren Einzelheiten erläutert. Es zeigen:
- die Figur 1: die zentralen Funktionselemente einer Spritzgiessmaschine mit einem Nachkühlsystem, nach der Stand der Technik;
- die Figur 2: einen Nachkühler, der roboterartige Mittel aufweist für eine Steuerung/Regelung in zwei Koordinaten;
- die Figur 3: die An- und Übertriebsmittel für den Nachkühler in grösserem Massstab;
- die Figuren 4 und 5: ein Beispiel für eine versetzte Anordnung der Kühlhülsen in dem Nachkühler; wobei die Figur 5 eine Ausschnittsvergrösserung der Figur 4 ist;
- die Figur 6: ein Steuerschema für mehrere Achsen.

### Wege und Ausführung der Erfindung

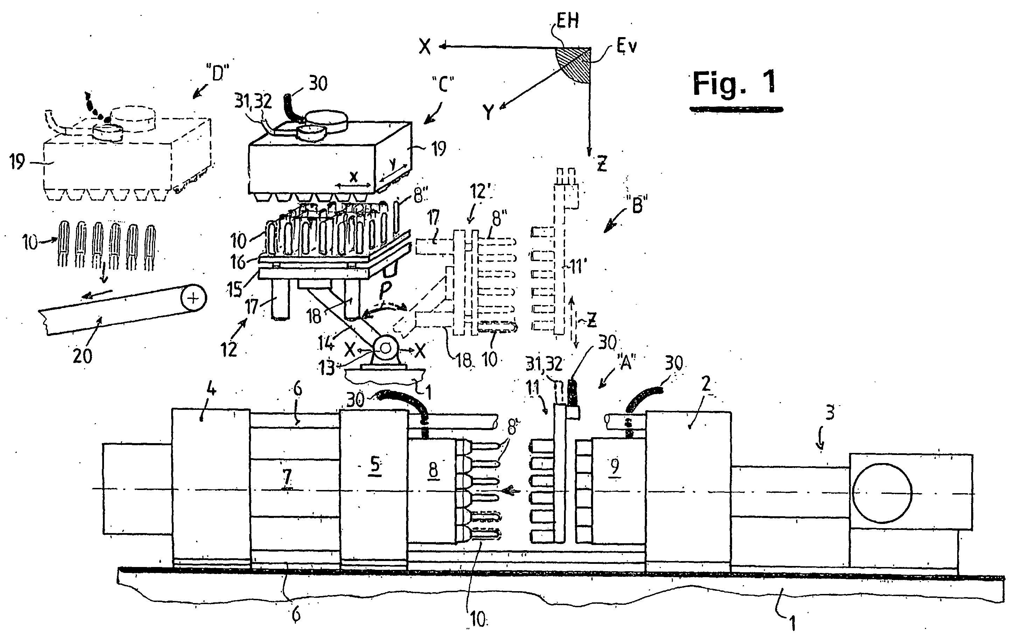

Die Figur 1 zeigt eine ganze Spritzgiessmaschine für Vorformlinge mit einem Maschinenbett 1, auf dem eine feste Formaufspannplatte 2 und eine Spritzeinheit 3 gelagert sind. Eine Abstützplatte 4 und eine bewegliche Formaufspannplatte 5 sind axial verschieblich auf dem Maschinenbett 1 abgestützt. Die beiden festen Platten 2 und 4 sind durch vier Holme 6 miteinander verbunden und durch die bewegliche Formaufspannplatte 5 hindurchgeführt. Zwischen der Abstützplatte 4 und der beweglichen Formaufspannplatte 5 befindet sich eine Antriebseinheit 7 zur Erzeugung des Schliessdruckes. Die feste Formaufspannplatte 2 und die bewegliche Formaufspannplatte 5 tragen je eine Formhälfte 8 bzw.. 9, in denen eine Vielzahl von Kavitäten zur Erzeugung einer entsprechenden Zahl hülsenförmiger Spritzgiessteile angeordnet sind. Die Teilformen 8' sind als Dorne ausgebildet, an denen nach dem Öffnen der Formhälften 8 und 9 die hülsenförmigen Spritzgiessteile 10 haften. Die Spritzgiessteile 10 befinden sich zu diesem Zeitpunkt bereits in einem halb erstarrten Zustand und sind mit unterbrochenen Linien angedeutet. Die gleichen Spritzgiessteile 10 im fertig gekühlten Zustand sind in der Figur 1 links oben dargestellt, wo sie gerade aus einer Nachkühleinrichtung 19 ausgeworfen werden. Die oberen Holme 6 sind zum Zweck der besseren Darstellung der. Einzelheiten zwischen den geöffneten Formhälften unterbrochen dargestellt. Die vier wichtigsten Handlingsphasen für die Spritzgiessteile nach-Abschluss des Giessprozesses gemäss der Lösung nach Figur 1 sind:
"**A**" ist die Entnahme der Spritzgiessteile oder Vorformlinge 10 aus den beiden Formhälften. Die halbstarren Teile werden dabei von einer im Raum zwischen den geöffneten Formhälften abgesenkten Entnahmevorrichtung 11 (Position "A") aufgenommen und mit dieser in die Position "B" angehoben (Aufnahmevorrichtung 1 1 ' in Figur 1).
"**B**" ist die Übergabe-Stellung der Entnahmevorrichtung 11 mit den Vorformlingen 10 an einem Transfergreifer 12.
"**C**" ist die Übergabe der Vorformlinge 10 von dem Transfergreifer 12 an eine Nachkühleinrichtung 19.
"D" ist der Abwurf der abgekühlten und in einen formstabilen Zustand gebrachten Vorformlinge aus der Nachkühleinrichtung 19.

Die -Figur 1 zeigt sozusagen Momentaufnahmen der vier Hauptschritte für das Handling. In der Position "B" werden-die senkrecht übereinander, liegend angeordneten Spritzgiessteile 10 von dem Transfergreifer 12 bzw. 12' übernommen und durch -Verschwenken der Transfervorrichtung in Richtung des Pfeiles P in eine stehende Position, gemäss Phase "C", gebracht. Der Transfergreifer 12 besteht aus einem um eine Achse 13 schwenkbaren Haltearm 14, der eine Halteplatte 15 trägt, zu der im Parallelabstand eine Trägerplatte 16 für Zentrierdorne 8" angeordnet ist. Die Trägerplatte 16 ist parallel zur Halteplatte 15 ausstellbar, so dass in der Position "B" die hülsenförmigen Spritzgiessteile 10 aus der Entnahmevorrichtung 11 geholt und in der in die Position "C" geschwenkten Lage-in die-darüberliegende Nachkühleinrichtung 19 geschoben werden können. Die jeweilige Übergabe erfolgt durch Vergrösserung des Abstandes zwischen der Halteplatte 15 und der Trägerplatte 16. Die noch halbstarren Spritzgiessteile 10 werden in der Nachkühleinrichtung 19 fertiggekühlt und nach einer Verschiebung der Nachkühleinrichtung 19 in der Position "D" ausgestossen und auf ein Förderband 20 geworfen. Das Bezugszeichen 30 ist die Wasserkühlung mit entsprechenden Zu bzw. Abführleitungen, welche zur Vereinfachung mit Pfeilen angedeutet sind und als bekannt vorausgesetzt werden. Das Bezugszeichen 31/32 bezeichnet die Luftseite, wobei 31 für das Einblasen resp. die Druckluftzufuhr und 32 Vakuum resp. Luftabsaugen steht.

In der Figur 1 ist die Horizontalebene mit EH und die Vertikalebene mit EV- bezeichnet. Die Horizontalebene EH wird durch die beiden Koordinaten X und Y und die Vertikalebene durch dei Koordinaten Y und Z definiert. Die Z-Koordinate ist vertikal, und die X-Achse ist quer dazu ausgerichtet. Die Bewegung der einzelnen Vorrichtungen bzw. die Automatisierung ist nur schematisch mit Pfeilen angedeutet. Ein Hauptziel der neuen Lösung liegt darin, dass die Platzierung der Vorfomlinge für das Nachkühlen verdichtet wird. Ein wichtiges Teilziel ist eine Optimierung in Bezug auf das Handling von verschieden dichten Anordnungen der Giessformen in dem Nachkühler. Die Figur 1 stellt ein mögliches Grundschema dar, welches in verschiedensten Variationen gemäss der neuen Lösung ausgestaltet werden-kann:
- Der Transfergreifer 12 führt eine Verschwenkbewegung sowie eine Linearbewegung in der X-Koordinate durch. Der Transfergreifer 12 kann zusätzlich mit einer gesteuerten Bewegung in der Y-Koordinate ausgebildet werden. Weil der Transfergreifer bereits eine gesteuerte Bewegung in der X-Koordinate hat, kann die Exaktpositionierung der auf den Haltedornen des Transfergreifers befindlichen Vorfomlinge in X-Richtung durch eine entsprechend gesteuerte/geregelte Bewegung durchgeführt werden. Für die Übergabe der Vorfomlinge an den Nachkühler 19 wird in diesem Fall der Nachkühler 19 in X-Richtung auf eine fixierte Position gefahren und der Transfergreifer in der Y-Richtung gesteuert/geregelt in die jeweils gewünschte Position gebracht.
- Bei der bevorzugten Ausgestaltung sind die Bewegungsmittel für den Nachkühler 19 für die zwei Koordinaten X und Y zur exakten Positionierung für die Übergabe der Vorfomlinge steuer/regelbar. Dabei wird der Transfergreifer 12 jeweils in eine fixe Übergabeposition gesetzt.

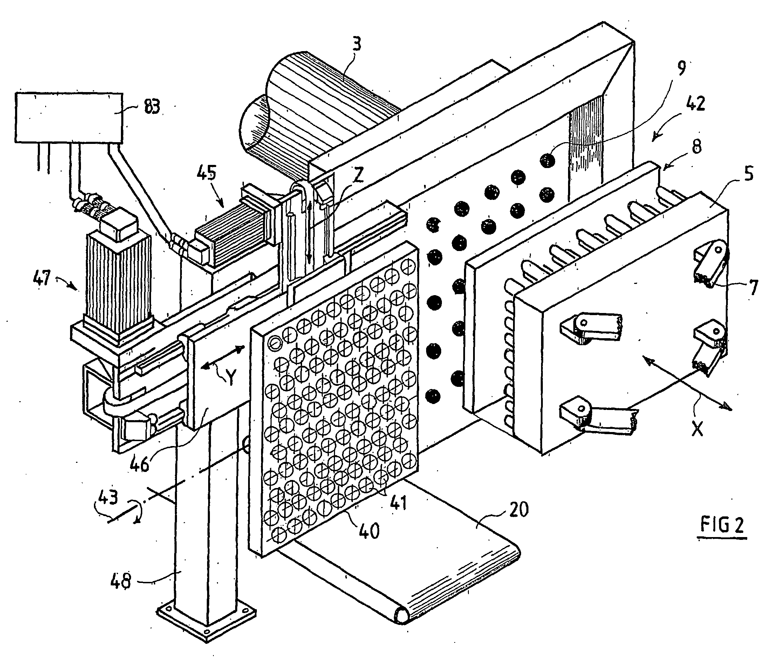

Die Figur 2 zeigt ein Nachkühlkonzept in Kompaktbauweise. Auf Seiten der Spritzgiessmaschine kann die Lösung der Figur 1 entsprechen, weshalb die gleichen Teile mit den selben Bezugszeichen versehen sind. Ein Nachkühler 40 mit einer Vielzahl von Kühlhülsen 41 weist eine senkrechte Übernahmeebene auf, d.h -eine Ebene innerhalb der Koordinaten Y und Z. In der dargestellten Position sind die beiden Formhälften 8 und 9 in geöffnetem Zustand, so dass der Nachkühler 40 in den freien Zwischenraum 42 zwischen-den Formhälften einfahren kann. Der Nachkühler 40 hat insgesamt drei Bewegungsachsen, eine Horizontalbewegungsachse in der Y-Koordinate, eine Vertikalbewegungsachse in der Z-Koordinate sowie eine Drehachse 43. Die Drehachse-43 dient lediglich dem Abwurf der fertig gekühlten Vorfomlinge auf ein Transportband 20. Darauf wird nicht weiter eingegangen. Die Drehachse 43 ist gegenüber einer Grundplatte 44 gelagert, welche Teil der Bewegungsmittel für die Vertikalbewegung bzw. eines Vertikalantriebes 45 ist. Der Vertikalantrieb 45 ist gleitfähig auf einer Grundplatte 46 eines Horizontalantriebes 47 angeordnet.

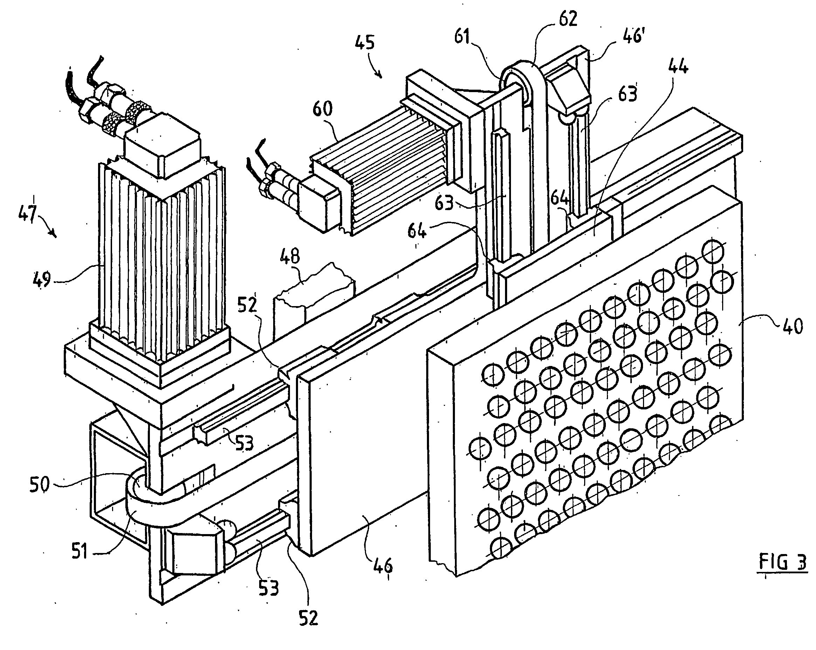

Die Figur 3 zeigt die beiden Antriebe in grösserem Massstab. In der Figur 3 ist der Rahmen 48, an dem der ganze Horizontalantrieb 47 befestigt ist, nur angedeutet. Der Horizontalantrieb weist einen AC-Servomotor 49 mit vertikaler Achse auf. Die Abtriebsachse des Servomotors 49 treibt über ein Übertriebsrad 50 einen Zahnriemen 51 an, welcher die Grundplatte 46 bewegt. Die Grundplatte 46 ist über vier Gleitkörper 52 auf zwei parallelen Gleitschienen 53 hin- und herbewegbar gelagert. Die Grundplatte 46 weist auf der rechten Bildseite ein senkrecht nach oben gerichtetes Grundplattenteil 46' auf, an welchem der Vertikalantrieb 45 verankert ist. Der Vertikalantrieb 45 weist ebenfalls einen AC-Servomotor 60 mit horizontaler Achse auf. Dieser treibt über ein Übertriebsrad 61 einen Zahnriemen 62 an, welcher über die Grundplatte 44 die vertikale Bewegung des Nachkühlers 40 sicherstellt. Auf der Grundplatte 46, 46' sind zwei Gleitschienen 63 verankert. Die Grundplatte 44 ist über Gleitelemente 64 auf den Gleitschienen 63 geführt. Die Gleitelemente 64 bzw. Gleitkörper 42 können eine Kugelumlaufführung aufweisen zur möglichst spielfreien und reibungsarmen Führung.

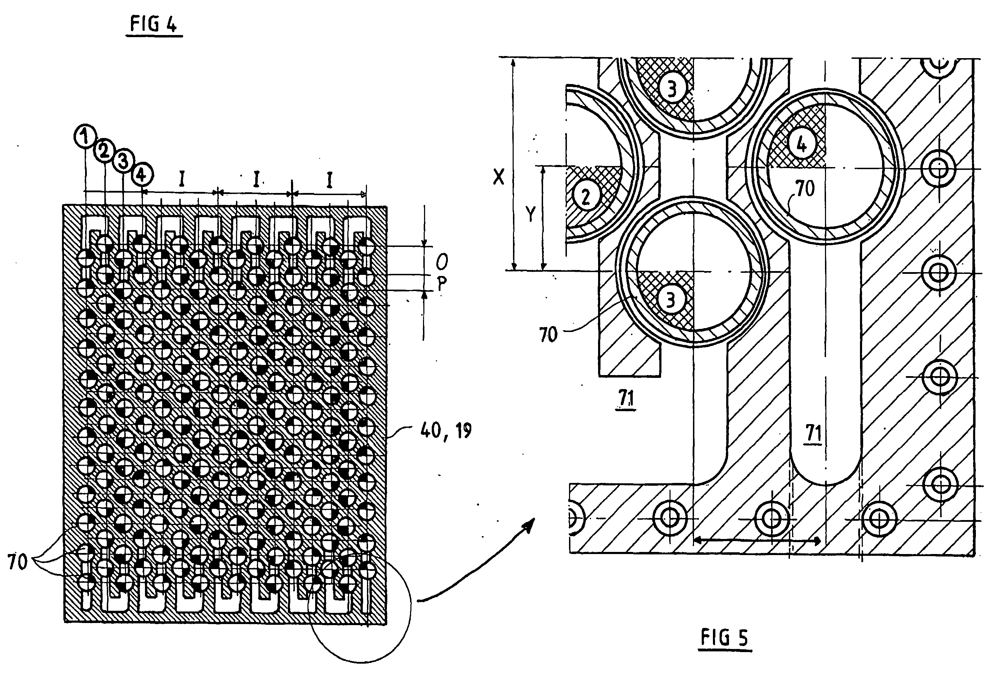

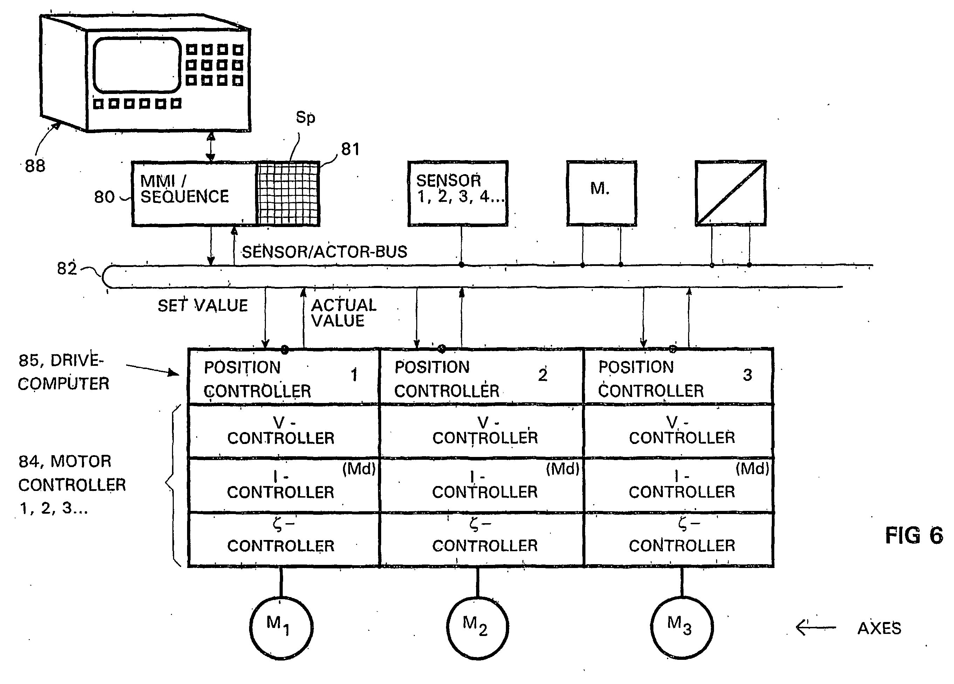

Die Nachkühleinrichtung gemäss Figuren 4 und 5 weist mehrere parallel angeordnete Reihen ①, ②, ③, ④ auf. Beim gezeigten Beispiel sind in einer senkrechten Reihe jeweils 12 Kühlhülsen 70 für die Aufnahme je einer Vorformling 10. Die Kühlhülsen 70 können in Bezug auf die Verhältnisse in den Giessformteilungen sehr viel enger angeordnet werden. Es werden deshalb nicht nur mehrere parallele Reihen, sondern zusätzlich eine Versetzung der Reihen vorgeschlagen, wie aus dem Figuren 4 und 5 mit den Massangaben "O" resp. "P" zum Ausdruck kommt. Dies bedeutet, dass für einen ersten Giesszyklus die Kühlrohre mit Nummern ①, für einen zweiten Giesszyklus die Kühlrohre mit Nummern ②, usw. bezeichnet werden. Sind beim Beispiel mit vier Parallelreihen alle Reihen mit Nr. ③ gefüllt, werden die Reihen mit Nr. ①, wie beschrieben, für ein Ausstossen auf das Förderband 20 vorbereitet. Der Rest verläuft über die ganze Produktionszeit sinngemäss. Im gezeigten Beispiel liegt die gesamte Nachkühlzeit in der Grössenordnung von drei bis vier mal der Giesszeit. Die Kühlräume 71 für die Wasserkühlung müssen optimal angeordnet sein, damit die Wasserkühlung bei allen Kühlrohren möglichst einheitlich und bestmöglich wirkt. Andererseits müssen die Luftdruck- bzw. Unterdruckverhältnisse in der Nachkühleinrichtung reihenweise steuerbar sein, damit zu einem bestimmten Zeitpunkt alle Reihen ① oder ② usw. gleichzeitig aktiviert werden können.

Die Figur 6 zeigt ein vorteilhaftes Grundschema, das besonders die Hauptfunktionselemente für die Steuerung/Regelung von mehreren Achsen darstellt. Ein Maschinenrechner 80 mit einem Rechner-Datenspeicher 81 ist über einen Bus bzw. einen Sensor/Actor-Bus -82 mit mehreren Achsen, je mit Kontrollern 84 und je einem Driverechner 85, verbunden. Jeder Kontroller 84 weist je einen eigenen Geschwindigkeitsregler (V-Regler) sowie einen Stromregler (I-Regler) auf, der das Drehmoment sowie die Feld-Kontrolle (ϕ-Kontrolle) regelt und ist jeweils mit einer Achse resp. dem entsprechenden Motor M1, M2, resp. M3 verbunden. An dem Sensor/Actor-Bus 82 können auch alle notwendigen Signal- oder Steuerverbindungen der Maschine, wie Sensoren, Hilfsmotoren, usw. angeschlossen werden. Die direkte Geschwindigkeitsverarbeitung für alle Regelaufgaben findet im Maschinenrechner 80 statt auf Grund von Sollwerten, Grenzwerten oder einem entsprechenden Rezept, das für jede spezifische Arbeit von dem Rechner-Datenspeicher 81 übergeben wird. Neben der Genauigkeit der Wegregelung ist es wichtig, dass die Beschleunigungs- und Verzögerungtsfunktionen optimal gesteuert werden. Die Visualisierung findet in einem Kommandogerät 88 der Maschinensteuerung resp. des Maschinenrechners 80 statt.

In der Figur 6 sind drei Achsen im Sinne eines Beispieles dargestellt. Im Rahmen der aufgeführten Steuerphilosophie können beliebige weiere Achsen gesteuert/geregelt, insbesondere koordiniert werden. Die Bewegungsabläufe können in jeder -Hinsicht optimiert werden. Dies betrifft z.B. Start und Stop, vor allem aber auch Beschleunigungen und Verzögerungen im Hinblick auf Geschwindigkeit und Weg. Für die Maschine können beliebige andere Funktionen, wie z.B. der Spritzvorgang und die Formschliessung mit derselben, einheitlichen Steuerungs- bzw. Regelungsphilosophie geführt werden, was die Beherrschung des ganzen Prozessablaufes erleichtert und insbesondere eine extrem grosse Flexibilität mit höchsten qualitativen Ergebnissen erlaubt. Die ganz besonders kritischen Phasen bzw. Bereiche des Prozesses können zudem mit einer bisher nicht erreichten Stabilität und Reproduzierbarkeit des Produktionsablaufes innerhalb einer sehr kurzen Gesamt-Zykluszeit geführt werden. Besonders vorteilhaft -ist dabei die Kombination von Mehrgrössenregelung und Mehrachsdrive. Gemäss einer weiteren Ausgestaltung ist es ferner möglich, ein Geschwindigkeitsstellsignal zu integrieren und als Wegstellsignal (evtl. in Form von Wegsignalen) zur Steuerelektronik (Drive mit integriertem Geschwindigkeits- und Lageregler) zu senden.

## Patentansprüche

1. Vorrichtung für das chargenweise Herstellen von hülsenförmigen Teilen (10), insbesondere Vorformlingen, für PET-Flaschen, welche nach dem Spritzvorgang den Formen (8, 9) entnommen und in einem Nachkühler (40) in einen formstabilen Lagerzustand gebracht werden, wobei alle in einer Form pro Zyklus gespritzten Teile (10) entnommen und dem Nachkühler (40) übergebbar sind, wobei
der Nachkühler (40) als Entnahmeroboter ausgebildet ist und in einer Übernahmeebene ein Fassungsvermögen aufweist, das ein Mehrfaches der pro Spritzzyklus hergestellten Teile (10) entspricht, wobei der Entnahmeroboter eine Einteilung der Kühlpositionen mit versetzten Reihen (O, P) und steuer-/regelbare Bewegungsmittel (45 - 63) für die zwei Koordinaten (Y, Z) der Übernahmeebene aufweist zur grösseren Verdichtung der zu kühlenden Teile (10).

2. Vorrichtung nach Anspruch 1, wobei
der Entnahmeroboter mittels der steuer-/regelbaren Bewegungsmittel (45 - 63) in die je freien Kühlpositionen zyklisch in die in den Formen (8, 9) festgelegte Anordnung der Spritzteile derart positionierbar ist, dass im Entnahmeroboter die maximal mögliche Dichte der Kühlpositionen erreichbar ist.

3. Vorrichtung nach Anspruch 1 oder 2, wobei
das Fassungsvermögen des Entnahmeroboters mindestens dem drei-, insbesondere dem vierfachen der Zahl von in einem Spritzgiesszyklus hergestellten Teile (10) entspricht.

4. Vorrichtung nach einem der Ansprüche 1 bis 3, wobei
die steuerbaren Bewegungsmittel (45 - 63) Programmspeicher (80, 81) und für jede der beiden Raumachsen programmgesteuert/geregelte Servomotoren (45 - 47) mit internen Positionsmessmitteln aufweisen zum roboterartigen Handling der Spritzgiessteile (10), oder dass den beiden Raumachsen (Y, Z) externe Positionsmessmittel und Positionssteuerungs-/Regelmittel zugeordnet sind zur Positionssteuerung/Regelung der Bewegungsmittel (45 - 63).

5. Vorrichtung nach einem der Ansprüche 1 bis 4, wobei
der Entnahmeroboter als Austauschmodul ausgebildet ist mit Passstellen für ein jeweils schnelles und exaktes Wiedermontieren eines anderen Austauschmodules.

6. Vorrichtung nach Anspruch 5, wobei
sie Rechner- und Speichermittel (80, 81) aufweist zur programmatischen Abspeicherung aller Bewegungen, derart, dass bei einem Form- und Nachkühlerwechsel durch Wahl eines passenden Programmes die Produktion wieder startbereit ist.

7. Vorrichtung nach einem der Ansprüche 1 bis 6, wobei
alle Bewegungsachsen des Entnahmeroboters (Y, Z) als steuerbare Servoachsen (45 - 47) ausgebildet und über zentrale Programme steuer-/regelbar sind.

8. Vorrichtung nach einem der Ansprüche 1 bis 7, wobei
für eine Weg-Regelung/Steuerung die Positionssignale für das bewegte Teil über entsprechende Sensoren direkt aus der AC-Servomotorsteuerung (45, 47) oder über das bewegte Teil gewonnen und die Bewegung entsprechend gesteuert/geregelt wird.

9. Vorrichtung nach einem der Ansprüche 1 bis 8, wobei
die steuer-/regelbaren Bewegungsmittel (45 - 63) des Nachkühlers (19) wenigstens einen Riemenübertrieb (61, 62) oder einen Zahnstangenübertrieb aufweisen.

10. Vorrichtung nach einem der Ansprüche 1 bis 9, wobei
die Spritzgiessform (8, 9) für 96, 144 oder mehr Teile (10) pro Spritzgiesszyklus ausgebildet ist.

11. Vorrichtung nach Anspruch 10, wobei
die Einteilung des Entnahmeroboters auf vier Gruppen mit jeweils versetzten Reihen ① ② ③ ④ ausgerichtet ist.

12. Vorrichtung nach einem der Ansprüche 1 bis 11, wobei
die Übernahmeebene für die Vorformlinge (10) senkrecht zur Richtung (X) der Formbewegung angeordnet ist.

## Claims

1. Device for the batchwise production of tubular parts (10), in particular preforms for PET bottles, which, after the injection moulding process, are removed from the moulds (8, 9) and brought into a dimensionally stable storage state in an aftercooler (40), wherein all of the parts (10) that are injection-moulded per cycle are removed and may be transferred to the aftercooler (40), wherein the aftercooler (40) is configured as an extractor robot and, in a transfer plane, exhibits a capacity that corresponds to a multiple of the parts (10) produced per injection-moulded cycle, wherein, for greater compression of the parts (10) to be cooled, the extractor robot exhibits a distribution of the cooling positions with offset rows (O, P) and controllable/adjustable movement means (46 to 63) for the two coordinates (Y, Z).

2. Device according to claim 1, wherein, using the controllable/adjustable means (45 to 63) for movement into each of the free cooling positions, the extractor robot may be positioned cyclically into the arrangement of the moulded parts determined in the moulds (8, 9) such that the maximum possible density of the cooling positions may be attained in the extractor robot.

3. Device according to either claim 1 or claim 2, wherein the capacity of the extractor robot corresponds to at least three times, in particular four times, the number of parts (10) produced in an injection-moulding cycle.

4. Device according to any one of claims 1 to 3, wherein the controllable movement means (45 to 63) comprise programme memories (80, 81) and, for each of the two spatial axes, programme-controlled/adjusted servomotors (45 to 47) with internal position-measuring means for the robot-like handling of the injection-moulded parts (10), or wherein, for the positional control/adjustment of the movement means (45 to 63), external position-measuring means and positional control/adjustment means are associated with the two spatial axes (Y, Z).

5. Device according to any one of claims 1 to 4, wherein the extractor robot is configured as an exchange module, with alignment points for a respectively rapid and precise reassembly of a different exchange module.

6. Device according to claim 5, wherein it comprises computation and storage means (80, 81) for programmatically storing any movements such that, in the event of a mould and aftercooler exchange, production is ready to be restarted by the selection of a suitable programme.

7. Device according to any one of claims 1 to 6, wherein all of the movement axes of the extractor robot (Y, Z) are configured as controllable servo-axes (45 to 47) and are controllable/adjustable via central programmes.

8. Device according to any one of claims 1 to 7, wherein, for path adjustment/control, the position signals for the moved part are obtained directly from the AC servomotor control system (45, 47) via corresponding sensors or via the moved part, and the movement is correspondingly controlled/adjusted.

9. Device according to any one of claims 1 to 8, wherein the controllable/adjustable movement means (45 to 63) of the aftercooler (19) comprise at least one belt overdrive (61, 62) or a rack overdrive.

10. Device according to any one of claims 1 to 9, wherein the injection mould (8, 9) is configured for 96, 144 or more parts (10) per injection-moulding cycle.

11. Device according to claim 10, wherein the division of the extractor robot is aligned with four groups, each with offset rows (1, 2, 3, 4).

12. Device according to any one of claims 1 to 11, wherein the transfer plane for the preform (10) is arranged perpendicularly to the direction (X) of the moulding movement.

## Revendications

1. Dispositif pour la fabrication par charges successives de pièces en forme de manchon (10) en particulier de préformes, pour des bouteilles en PET, lesquelles sont prélevées des moules (8, 9) après le procédé d'injection et amenées dans un refroidisseur (40) dans un état logé indéformable, toutes les pièces (10) injectées par cycle dans un moule étant prélevées et transmises au refroidisseur (40),
le refroidisseur (40) étant conçu comme un robot de prélèvement et comprenant dans un plan de prélèvement un pouvoir de préhension qui correspond à une multiplicité des pièces (10) fabriquées par cycle d'injection, le robot de prélèvement comprenant une répartition des positions de refroidissement en rangs décalés (0, P, Q) et des moyens de déplacement pouvant être commandés/régulés (45-63) pour les deux coordonnées (Y, Z) du plan de prélèvement en vue d'un serrage plus important les pièces (10) destinées à être refroidies.

2. Dispositif selon la revendication 1,
le robot de prélèvement pouvant être positionné au moyen des moyens de déplacement pouvant être commandés/régulés (45-63) dans les positions de refroidissement libres respectives dans la disposition des pièces moulées par injection fixée dans les moules (8, 9), de telle sorte qu'il soit possible d'obtenir dans le robot de prélèvement la densité la plus grande possible de positions de refroidissement.

3. Dispositif selon la revendication 1 ou 2,
le pouvoir de préhension du robot de prélèvement correspondant au moins au triple, en particulier au quadruple du nombre de pièces (10) fabriquées au cours d'un cycle de moulage par injection.

4. Dispositif selon l'une des revendications 1 à 3,
les moyens de déplacement commandables (45-63) comprenant des horloges programmatrices (80, 81) et pour chacun des deux axes spatiaux des servomoteurs commandés/régulés par un programme (45-47) avec des moyens de positionnement internes destinés au maniement du type par robot des pièces moulées par injection (10), ou que des moyens de mesure de position et des moyens de commande/de régulation de position sont associés aux deux axes spatiaux (Y, Z), destinés à la commande/à la régulation de position des moyens de déplacement (45-63).

5. Dispositif selon l'une des revendications 1 à 4,
le robot de prélèvement étant conçu comme un module interchangeable avec des points d'ajustement pour un remontage respectivement rapide et exact d'un autre module interchangeable.

6. Dispositif selon la revendication 5,
sachant qu'il comprend des moyens de calcul et d'enregistrement (80, 81) destinés à l'enregistrement programmatique de tous les déplacements, de telle sorte que, à l'occasion d'un remplacement de moule et de refroidisseur, en sélectionnant un programme adapté, la production est à nouveau prête au démarrage.

7. Dispositif selon l'une des revendications 1 à 6,
tous les axes de déplacement du robot de prélèvement (Y, Z) étant conçus comme des servoaxes commandables (45-47) et pouvant être régulés/commandés par des programmes centraux.

8. Dispositif selon l'une des revendications 1 à 7,
les signaux de position pour la pièce déplacée, pour une commande/régulation de trajet, étant obtenus par l'intermédiaire de capteurs correspondants directement à partir d'une commande de servomoteur AC (45, 47) ou par l'intermédiaire de la pièce déplacée et le déplacement étant commandé/régulé de manière correspondante.

9. Dispositif selon l'une des revendications 1 à 8,
les moyens de déplacement pouvant être commandés/régulés (45-63) du refroidisseur (19) comprenant au moins une transmission par courroie (61, 62) ou une transmission à crémaillères.

10. Dispositif selon l'une des revendications 1 à 9,
le moule de moulage par injection (8, 9) étant conçu pour 96, 144 pièces (10) ou plus par cycle de moulage par injection.

11. Dispositif selon la revendication 10,
la répartition du robot de prélèvement est orientée en quatre groupes comprenant des rangées respectivement décalées 1, 2, 3, 4.

12. Dispositif selon l'une des revendications 1 à 11,
le plan de transmission pour les préformes (10) étant disposé perpendiculairement à la direction (X) du déplacement du moule.
